# NEUE EUROPÄISCHE PATENTSCHRIFT

(11) **EP 1 749 194 B2**
(45) Veröffentlichungstag und Bekanntmachung des Hinweises auf die Entscheidung über den Einspruch: **16.08.2017**
(45) Hinweis auf die Patenterteilung: 05.01.2011
(21) Anmeldenummer: 05740732.2
(22) Anmeldetag: 24.05.2005
(51) Int. Cl.: G01M 15/00, G01L 3/16, G01L 3/18, G01L 3/20, G01L 3/22, G01M 15/04

(54) **PRÜFSTAND FÜR BRENNKRAFTMASCHINEN**
TEST RIG FOR INTERNAL COMBUSTION ENGINES
BANC D'ESSAI POUR MOTEURS À COMBUSTION INTERNE

(30) Priorität: 24.05.2004 AT 37204 U
(43) Veröffentlichungstag der Anmeldung: 07.02.2007
(73) Patentinhaber: AVL List GmbH, 8020 Graz (AT)
(72) Erfinder: ERLACH, Hans, A-9125 Kühnsdorf (AT); ZIEGLER, Peter, M., 65193 Wiesbaden (DE); RATHNER, Roland, A-8020 Graz (AT); SCHNEIDERBECK, Helmut, A-8144 Tobelbad (AT); NONN, Harald, 69469 Weinheim (DE); SCHMIDT, Martin, 63225 Langen (DE); PAULWEBER, Michael, A-8071 Hausmannstätten (AT)
(74) Vertreter: Wallinger, Michael
(86) Internationale Anmeldenummer: PCT/AT2005/000177
(87) Internationale Veröffentlichungsnummer: WO 2005/116604

(56) Entgegenhaltungen:
- EP-A- 0 845 666
- EP-A- 0 857 959
- DE-A1- 3 135 679
- DE-A1- 3 534 501
- DE-A1- 3 942 016
- DE-A1- 4 019 581
- DE-A1- 10 025 095
- DE-C2- 3 405 951
- DE-T2- 69 604 186
- DE-U1- 29 810 622
- US-A- 1 450 511
- US-A- 2 741 830
- US-A- 4 520 659
- US-A- 4 899 595
- US-A- 5 515 712
- US-B1- 6 405 585
- PATENT ABSTRACTS OF JAPAN Bd. 007, Nr. 067 (P-184), 19. März 1983 (1983-03-19) & JP 57 211526 A (DAIFUKU KIKO KK), 25. Dezember 1982 (1982-12-25)
- MAHR B ET AL: "INSTATIONARPRUFSTAND FUR STANDARDMOTOREN, ERDGASMOTOREN UND WASSERSTOFFMOTOREN" MTZ MOTORTECHNISCHE ZEITSCHRIFT, VIEWEG, WIESBADEN, DE, Bd. 56, Nr. 6, 1. Juni 1995 (1995-06-01), Seiten 358-362, XP000508223 ISSN: 0024-8525
- Kurzbeschreibung "Prüftechnik Hochdynamische Motorprüfstände, ein mittlerweile unverzichtbares Instrument bei der Entwicklung von Verbrennungsmotoren", Siemens AG
- Zusammenfassung der S4
- intouch Magazin Mai 2005, Seiten 4,5
- CAD-Zeichnung, Schenk Pegasus GmbH
- Erklärung von Herrn Tremel
- CAD-Zeichnung TKS
- K. Ouchi, "Explanatory note", Firma Calsonic Kansei Corp.
- Foto Prüfstand MFPST23
- Foto Prüfstand MFPST23
- SPRATO E. ET AL: 'Neue BMW Antriebsprüfstände' AUTOMOTIVE ENGINEERING PARTNERS Juni 2002, Seiten 6 - 11
- W. HAUBER ET AL: 'Integrierte Signalauswertung zur schnelleren Versuchsauswertung am Beispiel von Verbrennungsmotoren' AUTOMOTIVE ENGINEERING PARTNERS April 2002,
- "Nichts ist unmöglich", Interview mit Herrn Kornherr, MTZ 9/2001

## Beschreibung

Die Erfindung betrifft einen Prüfstand für Brennkraftmaschinen, mit einem Fundament auf dem die zu prüfende Brennkraftmaschine einerseits und dieser abtriebsseitig gegenüber zumindest eine drehverbundene Antriebsmaschine andererseits angeordnet ist.

DE 298 10 622 U1 beschreibt einen Prüfstand für Brennkraftmaschinen mit einem Fundament auf dem die zu prüfende Brennkraftmaschine einerseits und dieser abtriebseitig gegenüber eine drehverbundene Antriebs- bzw. Belastungsmaschine andererseits angeordnet ist, deren Antriebsachse im wesentlichen mit der Abtriebsachse der zu prüfenden Brennkraftmaschine fluchtet, wobei die Antriebs- bzw. Belastungsmaschine 3 mit vertikalem Abstand zum Fundament unter Freilassung eines Durchganges an einer das Fundament überragenden und zumindest einseitig auf dem Fundament abgestützten Träganordnung montiert ist.

Prüfstände der genannten Art ermöglichen über die Vorgabe bestimmter Drehzahl- und/oder Drehmomentverläufe der Antriebs- bzw. Belastungsmaschine die Simulation der Ein- bzw. Rückwirkung der Betriebsumgebung auf den Abtrieb der zu prüfenden Brennkraftmaschine. Dies ist insbesonders beispielsweise im Laufe der Entwicklung einer Brennkraftmaschine von großem Vorteil, wenn das damit anzutreibende Fahrzeug samt allen Komponenten des Antriebstranges noch gar nicht in Realität existiert, da über die heutzutage bereits sehr hochdynamisch steuerbaren Antriebs- bzw. Belastungsmaschinen auf diese Weise trotzdem bereits vorweg sehr realitätsnahe Simulationen der späteren tatsächlichen Einsatzbedingungen möglich sind.

Bei den bekannten Prüfständen der genannten Art ergeben sich immer dann Probleme mit dem auf dem Fundament zur Verfügung stehenden Platz, wenn zur Prüfung beispielsweise einer Kolbenbrennkraftmaschine mit mehreren in Reihe angeordneten Zylindern, die mit der Kurbelwelle in Fahrzeuglängsrichtung eingebaut werden soll und damit üblicherweise eine im wesentlichen unterhalb der Kurbelwellenachse in Fahrzeuglängsrichtung nach hinten verlaufende Auspuffanlage aufweist, die Prüfung mit montierter Original-Auspuffanlage erfolgen soll, was immer häufiger gewünscht wird um möglichst realitätsnah prüfen zu können. Die Auspuffrohre sowie unter Umständen auch Katalysatoren und Schalldämpfer kommen in diesem Falle ungefähr dort relativ zum Fundament zu liegen, wo sonst üblicherweise die Antriebs- bzw. Belastungsmaschine auf dem Fundament angeordnet ist. Bei den bisher bekannten Anordnungen wird deshalb für solche Prüfstände zumeist die Antriebs- bzw. Belastungsmaschine auf einem unten offenen Traggestell auf dem Fundament montiert, was aber die Anordnung eines den damit entstehenden Achsversatz zwischen Brennkraftmaschinenabtrieb und Antriebs- bzw. Belastungsmaschine überbrückenden Getriebes, Riemenantriebs oder dgl. erfordert. Auch Lösungen mit über ein Winkelgetriebe verbundener Antriebs- bzw. Belastungsmaschine, die damit senkrecht neben der Brennkraftmaschine steht, sind bekannt. Weiters bekannt ist auch die Verwendung einer entsprechend langen Verbindungswelle (oft der Original-Kardanwelle) zwischen Brennkraftmaschine und Antriebs- bzw. Belastungsmaschine. In allen Fällen ergeben sich durch zusätzliche Massenträgheiten, Drehelastizitäten, Zahnspiele und Ähnliches negative Auswirkungen insbesonders in hochdynamischen Betrieb sowie zusätzlicher Wartungs- und Montageaufwand und speziell bei den Getriebelösungen ein erhöhtes Geräuschniveau am Prüfstand.

Aufgabe der vorliegenden Erfindung ist es, Prüfstände der eingangs genannten Art so auszubilden, dass sie auf einfache Weise auch für die Prüfung von Brennkraftmaschinen mit montierter und im wesentlichen unterhalb der Antriebsachse parallel zu deren Verlängerung von der Brennkraftmaschine wegführende Original-Auspuffanlage verwendet werden können, ohne die angesprochenen Nachteile der bekannten Lösungen aufzuweisen.

Diese Aufgabe wird gemäß der vorliegenden Erfindung bei einem Prüfstand nach Anspruch 1 gelöst. Die Antriebsmaschine ist mit vertikalem Abstand zum Fundament auf einer auf diesem angeordneten Traganordnung hängend mit im wesentlichen mit der Abtriebsachse der zu prüfenden Brennkraftmaschine fluchtender Antriebsachse montiert. Damit ist die mit ihrem Befestigungssockel bzw. sonstigen Befestigungselementen an der Traganordnung hängende Antriebsmaschine sehr einfach an die Achshöhe der Abtriebswelle der Brennkraftmaschine anzupassen - der unterhalb der Außenkontur (Störkontur) der Antriebsmaschine bis zum Fundament verbleibende Platz steht völlig frei für die Durchführung der Auspuffanlage zur Verfügung. Es kann damit ohne Zwischengetriebe, Wellenverlängerungen und dgl. eine sehr drehsteife und spielfreie Ankoppelung der Antriebsmaschine realisiert werden, was sehr hochdynamische Prüfungen ohne prüfstandsseitige Störungen bzw. Beeinflussungen ermöglicht. Der Entfall des Zwischengetriebes ermöglicht auch einen kostengünstigeren Aufbau des Prüfstandes und hilft mit das Geräuschniveau im Prüfstandsbereich zu senken.

In besonders bevorzugter Ausgestaltung der Erfindung ist als Antriebsmaschine eine auf die Leistung bezogen kleinbauende Permanentmagnet-Maschine montiert, was weitere Vorteile im Hinblick auf den unterhalb der Antriebsmaschine zur Verfügung stehenden Platz bringt.

In weiters bevorzugter Ausgestaltung der Erfindung ist vorgesehen, dass zwei oder mehrere Antriebsmaschinen in Serie hintereinander bzw. parallel nebeneinander (dann über ein Koppelgetriebe mit einer mit der Abtriebsachse der Brennkraftmaschine fluchtenden Ein- bzw. Ausgangsachse) hängend und drehverbunden montiert sind. Diese Lösung ist speziell für größere Prüfstandsleistungen sehr vorteilhaft, da zwei oder mehrere, zusammen die geforderte Leistung erbringende Maschinen trotzdem nur die Störkontur (von der Achse nach unten in den für die Auspuffanlage frei zu haltenden Raum ragend) einer gleichartigen Maschine haben. Auch lassen sich beispielsweise mit Koppel- bzw. Vorschaltgetrieben oft die geforderten Leistungs- bzw. Drehzahlbereiche leichter realisieren.

Die Traganordnung kann in weiters bevorzugter Ausgestaltung der Erfindung eine Fundamentplatte des Fundamentes brückenartig übergreifen und beidseitig auf dieser abgestützt und befestigt sein, was eine sehr stabile und hinsichtlich von im Prüfbetrieb auftretenden Vibrationen vorteilhafte Konstruktion ergibt.

Für manche Anwendungen vorteilhaft ist eine andere Ausgestaltung der Erfindung, bei der die Traganordnung nur einseitig auf einer Fundamentplatte des Fundamentes abgestützt und befestigt ist, da sich damit ein verbesserter seitlicher Zugang zur Antriebsmaschine, zur Auspuffanlage bzw. zu sonstigen in diesem Bereich vorgesehenen Aggregaten ergibt.

Nach einer anderen bevorzugten Ausgestaltung der Erfindung kann das Fundament in quasi dreidimensionaler Ausgestaltung (beispielsweise als stabiler Prüfstandscontainer) aber auch selbst die Antriebsmaschine zumindest bereichsweise in der Höhe übergreifen, wobei dann die Traganordnung von oben oder von der Seite her an diesem dreidimensionalen Fundament montiert die Antriebsmaschine hängend trägt, beispielsweise mit Hilfe einer hängenden V-förmigen Anordnung.

Die Antriebsmaschine kann in weiters bevorzugter Ausgestaltung der Erfindung unter Zwischenschaltung von Schwingungsdämpfern an der Traganordnung aufgehängt sein, was eine verbesserte schwingungstechnische Entkoppelung ermöglicht, die im übrigen auch über entsprechende sonstige Maßnahmen bei der Rahmenkonstruktion beeinflusst werden kann.

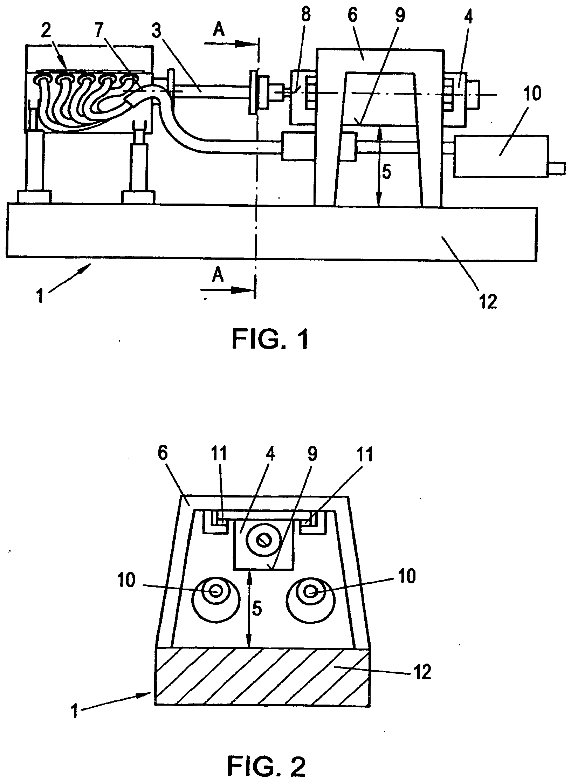

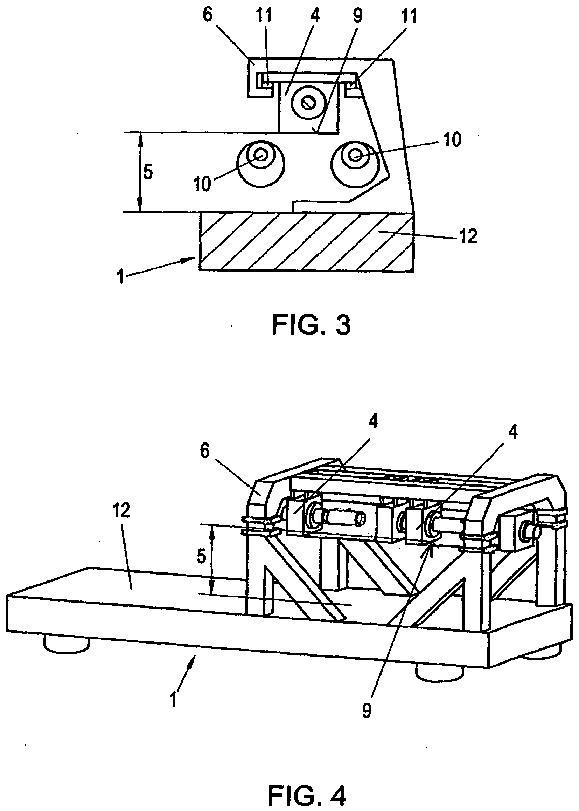

Die Erfindung wird im Folgenden noch anhand der in der Zeichnung schematisch dargestellten Ausführungsbeispiele näher erläutert. Fig. 1 zeigt dabei eine schematische Seitenansicht eines erfindungsgemäßen Prüfstandes, Fig. 2 und 3 zeigen jeweils Schnitte entlang der Linie A - A in Fig. 1 bei verschiedener Ausgestaltung der Traganordnung für die Antriebs maschine und Fig. 4 zeigt ein weiteres Ausführungsbeispiel eines erfindungsgemäßen Prüfstandes in perspektivischer Ansicht.

Der in allen Fällen dargestellte Prüfstand weist als Fundament 1 eine Fundamentplatte 12 auf, auf der die zu prüfende Brennkraftmaschine 2 (nur in Fig. 1 ersichtlich) einerseits und dieser auf der Abtriebseite gegenüber zumindest eine über eine Verbindungswelle 3 (wiederum nur in Fig. 1) drehverbundene Antriebsmaschine 4 angeordnet ist. Die beispielsweise als Permanentmagnet-Maschine ausgeführte Antriebsmaschine 4 ist mit vertikalem Abstand 5 zur Fundamentplatte 12 auf einer auf dieser angeordneten Traganordnung 6 hängend mit im wesentlichen mit der Abtriebsachse 7 der zu prüfenden Brennkraftmaschine 2 fluchtender Achse 8 montiert, sodass unterhalb der Störkontur 9 der Antriebsmaschine 4 ausreichend Platz für die an der Brennkraftmaschine 2 montierte Original-Auspuffanlage 10 verbleibt.

Während bei den Ausführungen nach Fig. 1 bis 3 nur eine Antriebsmaschine 4 vorgesehen ist, sind bei der üblicherweise für größere Prüfstandsleistungen vorgesehenen Ausführung nach Fig. 4 zwei derartige Maschinen 4 in Serie hintereinander hängend und drehverbunden montiert, was trotz verdoppelter Prüfstandleistung die Beibehaltung der gleichen Störkontur 9 wie bei einer einzelnen Antriebsmaschine 4 ermöglicht. Davon abgesehen könnten beispielsweise auch zwei klein bauende Antriebsmaschinen 4 nebeneinander hängend angeordnet und über ein Koppelgetriebe drehverbunden werden, wobei dann dessen Ausgangsachse mit der Abtriebsachse der zu prüfenden Brennkraftmaschine fluchtet.

Bei der Ausführung gemäß Fig. 2 übergreift die Traganordnung 6 die Fundamentplatte 12 brückenartig und ist beidseits auf dieser abgestützt und befestigt, was eine sehr stabile geschlossene Konstruktion, wie Sie auch in Fig. 4 verwirklicht ist, ermöglicht. Demgegenüber ist bei der Ausführung nach Fig. 3 die Traganordnung nur einseitig auf der Fundamentplatte 12 abgestützt und befestigt, was die Zugänglichkeit von der in der Darstellung linken Seite her verbessert und bei entsprechender Ausführung der einseitigen Abstützung trotzdem ausreichende Steifigkeit bietet. Abgesehen von diesen beiden Varianten mit einer separat im Prüfstandsbereich zumeist schwingungsisoliert aufgestellten Fundamentplatte 12 könnte das Fundament 1 auf hier nicht dargestellte Weise aber auch in quasi dreidimensionaler Ausgestaltung die zu prüfende Brennkraftmaschine und die Antriebsmaschine container- bzw. käfigartig umgreifen, wobei dann die Traganordnung seitlich oder von oben her an diesem Fundament angebracht und die zu prüfende Brennkraftmaschine auch unmittelbar mittels einer üblichen Prüfstandpalette befestigt sein könnte.

Speziell aus Fig. 2 und 3 ist auch ersichtlich, dass die Antriebsmaschine 4 unter Zwischenschaltung von Schwingungsdämpfern 11 an der Traganordnung 6 aufgehängt und damit schwingungsmäßig entkoppelt ist.

## Patentansprüche

1. Prüfstand mit einer Brennkraftmaschine, mit einem Fundament (1) auf dem die zu prüfende Brennkraftmaschine (2) einerseits und dieser abtriebsseitig gegenüber zumindest eine drehverbundene Antriebsmaschine (4) andererseits angeordnet ist, deren Antriebsachse (8) im Wesentlichen mit der Abtriebsachse (7) der zu prüfenden Brennkraftmaschine (2) fluchtet, welche eine Original-Auspuffanlage (10) trägt, die im wesentlichen unterhalb der Abtriebsachse (7) parallel zu deren Verlängerung von der Brennkraftmaschine (2) wegführt, wobei die Antriebsmaschine (4) mit vertikalem Abstand (5) zum Fundament (1) unter Freilassung eines die Original-Auspuffanlage (10) des der zu prüfenden Brennkraftmaschine (2) aufnehmenden Durchganges an einer das Fundament (1) überragenden und zumindest einseitig auf dem Fundament (1) abgestützten Traganordnung (6) hängend montiert ist.

2. Prüfstand nach Anspruch 1, **dadurch gekennzeichnet, dass** als Antriebsmaschine (4) eine auf die Leistung bezogen kleinbauende Permanentmagnet-Maschine montiert ist

3. Prüfstand nach Anspruch 1 oder 2, **dadurch gekennzeichnet, dass** die Antriebsmaschine (4) aus zwei oder mehreren in Serie hintereinander oder parallel nebeneinander hängend und drehverbunden montierten Einzelmaschinen besteht

4. Prüfstand nach einem der Ansprüche 1 bis 3, **dadurch gekennzeichnet, dass** die Traganordnung (6) eine Fundamentplatte des Fundamentes (1) brückenartig übergreift und beidseitig auf dieser abgestützt und befestigt ist.

5. Prüfstand nach einem der Ansprüche 1 bis 3, **dadurch gekennzeichnet, daß** das Fundament (1) selbst die Antriebsmaschine (4) zumindest bereichsweise in der Höhe übergreift und daß die Traganordnung (6) von oben bzw. von der Seite her hängend die Antriebsmaschine (4) trägt.

6. Prüfstand nach einem odermehreren der Ansprüche 1 bis 5, **dadurch gekennzeichnet, dass** die Antriebsmaschine (4) unter Zwischenschaltung von Schwingungsdämpfern (11) an der Traganordnung (6) aufgehängt ist.

## Claims

1. Engine test stand with an internal combustion engine, with a foundation (1) on which the internal combustion engine (2) that is to be tested is arranged for one, and on the output side of it, with respect to at least one rotationally connected drive machine (4) for another, the drive axle (8) of which is essentially aligned with the output axle (7) of the internal combustion engine that is to be tested and has an original exhaust system (10) leading away from the internal combustion engine (2) essentially below the output axle (7) parallel to the extension thereof, whereby the drive machine (4) is mounted hanging with vertical distance (5) with respect to the foundation (1) by leaving open a passage housing the original exhaust system (10) of the internal combustion engine that is to be tested (2) in a carrying arrangement (6) that projects over the foundation (1) and is supported by the foundation (1) at least on one side.

2. Engine test stand according to claim 1, **characterized by**, that as drive machine (4) a permanent magnet machine is mounted that is small in design with respect to performance.

3. Engine test stand according to claim 1 or 2, **characterized by**, that the drive machine (4) consists of two or more individual machines arranged in series behind each other or hanging parallel next to each other and rotationally connected.

4. Engine test stand according to one of claims 1 to 3, **characterized by**, that the carrying arrangement (6) overlaps a foundation plate of the foundation (1) bridge-like and is supported by it and mounted on it on both sides.

5. Engine test stand according to one of claims 1 to 3, **characterized by**, that the foundation (1) itself overlaps the drive machine (4) at least in sections at that level and that the carrying arrangement (6) carries - from the top or from the side - the drive machine (4).

6. Engine test stand according to one or more of claims 1 to 5, **characterized by**, that the drive machine (4) is hung at the carrying arrangement (6) using intermediate vibration absorbers (11).

## Revendications

1. Banc d'essai avec un moteur à combustion interne, comprenant une fondation (1) sur laquelle sont disposés d'une part le moteur à combustion interne (2) à tester et d'autre part, opposée à celle-ci côté sortie, au moins une machine d'entraînement (4) reliée en rotation, une machine dont l'axe d'entraînement (8) est aligné sensiblement avec l'axe de sortie (7) de la machine à combustion interne (2) à tester et qui porte système d'échappement (10) d'origine acheminant à partir du moteur à combustion interne (2) essentiellement au-dessous de l'axe de sortie (7) parallèlement à la prolongation de ce dernier, la machine d'entraînement (4) étant montée de façon suspendue à distance (5) verticale de la fondation (1) en laissant libre un passage recevant l'installation d'échappement d'origine (10) du moteur à combustion interne (2) à tester sur un agencement support (6) dépassant de la fondation (1) et soutenu au moins par un côté sur la fondation (1).

2. Banc d'essai selon la revendication 1, **caractérisé en ce qu'**une machine à aimant permanent de petite dimension par rapport à la puissance est montée comme machine d'entraînement (4).

3. Banc d'essai selon l'une des revendications 1 ou 2, **caractérisé en ce que** la machine d'entraînement (4) est constituée de deux ou plusieurs machines individuelles montées en série les unes derrière les autres ou en parallèle les unes à côté des autres et montées de façon reliée en rotation.

4. Banc d'essai selon l'une quelconque des revendications 1 à 3, **caractérisé en ce que** l'agencement support (6) chevauche à la façon d'un pont une plaque de fondation de la fondation (1) et est soutenu et fixé par les deux côtés sur cette plaque.

5. Banc d'essai selon l'une quelconque des revendications 1 à 3, **caractérisé en ce que** la fondation (1) même chevauche au moins par endroits la machine d'entraînement (4) et **en ce que** l'agencement support (6) porte la machine d'entraînement (4) de façon suspendue par le haut ou à partir du côté.

6. Banc d'essai selon l'une quelconque ou plusieurs des revendications 1 à 5, **caractérisé en ce que** la machine d'entraînement (4) est suspendue sur l'agencement support (6) avec l'intercalation d'amortisseurs de vibrations (11).
